# EUROPEAN PATENT APPLICATION

(11) **EP 4 541 173 A1**
(43) Date of publication of application: **23.04.2025**
(21) Application number: 23842024.4
(22) Date of filing: 27.06.2023
(51) Int. Cl.: A01D 34/00

(54) **MOWING METHOD AND DEVICE, MOWING ROBOT, AND STORAGE MEDIUM**

(30) Priority: 21.07.2022 CN 202210864206
(71) Applicant: Shenzhen Mammotion Innovation Co., Limited, Shenzhen, Guangdong 518000 (CN)
(72) Inventor: CHEN, Jianlin, Shenzhen, Guangdong 518000 (CN)
(74) Representative: Huang, Liwei
(86) International application number: PCT/CN2023/102729
(87) International publication number: WO 2024/016958

(57) **Abstract**

Embodiments of the present disclosure disclose a mowing method, including: when an unknown obstacle is detected during a mowing operation of a mowing robot, interrupting a mowing task, and performing a movement around the unknown obstacle to generate a surrounding trajectory; obtaining an task breakpoint on an initial operation route at which the mowing task of the mowing robot is interrupted; determining a remaining operation region in a preset mowing region based on the task breakpoint and the surrounding trajectory; generating an operation route corresponding to the remaining operation region based on the task breakpoint and a preset mowing direction; and controlling the mowing robot to return to the task breakpoint from a current position and continue to perform the mowing operation based on the operation route. With this solution, the working time of the mowing robot can be shortened and the mowing efficiency can be improved.

## Description

The present application claims the priority to Chinese Patent Application No. CN202210864206.3, filed in the China National Intellectual Property Administration on July 21, 2022 and entitled "MOWING METHOD AND APPARATUS, MOWING ROBOT, AND STORAGE MEDIUM", which is incorporated herein by reference in its entirety.

### Technical Field

The present application relates to the field of computer technology, and particularly to a mowing method and apparatus, a mowing robot, and a storage medium.

### Background Art

Mowing robots are widely used for maintaining home yard lawns and trimming large grasslands. The mowing robots incorporate techniques such as motion control, multi-sensor fusion, and path planning. In order to control a mowing robot to implement a mowing operation, a mowing path needs to be planned for the mowing robot such that all working regions can be completely covered. However, in the current solution, if the work of the mowing robot is suspended during the mowing operation, in the next time of mowing operation, the mowing robot has to return to a start point to perform the mowing operation all over again, resulting in long working time for the mowing robot, which reduces mowing efficiency.

### Summary

Embodiments of the present disclosure provide a mowing method and apparatus, a mowing robot, and a storage medium, which can shorten the working time of the mowing robot and improve mowing efficiency.

In a first aspect, an embodiment of the present disclosure provides a mowing method, comprises:
interrupting a mowing task of a mowing robot when an unknown obstacle is detected during a mowing operation, and performing a movement around the unknown obstacle to generate a surrounding trajectory;
obtaining a task breakpoint on an initial operational route when the mowing task of the mowing robot is interrupted;
determining a remaining operation region in a preset mowing region based on the task breakpoint and the surrounding trajectory;
generating an operational route corresponding to the remaining operation region based on the task breakpoint and a preset mowing direction; and
controlling the mowing robot to return to the task breakpoint from a current position and continue to perform the mowing operation based on the operational route.

Optionally, the obtaining an task breakpoint on an initial operation route at which the mowing task of the mowing robot is interrupted includes:
receiving a task interruption instruction; and
obtaining the task breakpoint on the initial operation route based on a timestamp corresponding to the task interruption instruction.

Optionally, the determining a remaining operation region in a preset mowing region based on the task breakpoint and the surrounding trajectory includes:
determining, based on the surrounding trajectory, a region to be mowed in the preset mowing region;
determining the completed mowing operation route in the initial operation route based on the task breakpoint of the initial operation route and a start point of the initial operation route; and
dividing, based on the operation route for which the mowing operation has been completed, the region to be mowed into the remaining operation region and a completed operation region, where the completed operation region is an first operation region in which the operation route for which the mowing operation has been completed is located, and the remaining operation region is an operation region in which no operation route exists.

Optionally, the performing a movement around the unknown obstacle to generate a surrounding trajectory includes:
detecting whether the surrounding trajectory is a closed trajectory, where a start point and an end point of the closed trajectory are the same; and
modifying the surrounding trajectory based on a preset strategy to obtain a closed trajectory when it is detected that the surrounding trajectory is not a closed trajectory.

Optionally, the modifying the surrounding trajectory based on a preset strategy to obtain a closed trajectory includes:
obtaining a shape and an area of the unknown obstacle;
generating, based on the shape and the area of the unknown obstacle, a polygonal region covering the unknown obstacle, where the polygonal region is a closed region formed by sequentially joining a plurality of line segments, and each of the line segments belongs to a boundary of the polygonal region; and
generating the closed trajectory based on the boundaries of the polygonal region.

Optionally, the mowing method further includes:
obtaining an edited remaining operation region; and
updating the second operation route based on the edited remaining operation region,
where the controlling the mowing robot to continue to perform the mowing operation based on the operation route includes: controlling the mowing robot to continue to perform the mowing operation based on the updated operation route.

Optionally, the updating the operation route based on the edited remaining operation region includes:
generating an third operation route corresponding to an additional operation region; and
joining the third operation route corresponding to the additional operation region and the second operation route corresponding to the remaining operation region, to obtain the updated operation route.

In a second aspect, an embodiment of the present disclosure provides a mowing apparatus, including:
a monitoring module configured to, interrupt a mowing task of a mowing robot when an unknown obstacle is detected during a mowing operation, and perform a movement around the unknown obstacle to generate a surrounding trajectory;
an obtaining module configured to obtain an task breakpoint on an initial operation route at which the mowing task of the mowing robot is interrupted;
a determination module configured to determine a remaining operation region in a preset mowing region based on the task breakpoint and the surrounding trajectory;
a generation module configured to generate an operation route corresponding to the remaining operation region based on the task breakpoint and a preset mowing direction; and
a control module configured to control the mowing robot to return to the task breakpoint from a current position and continue to perform the mowing operation based on the operation route.

In a third aspect, an embodiment of the present disclosure provides a mowing robot, including a memory, a processor, and a computer program stored on the memory and executable by the processor, where the processor, when executing the program, implements the steps of the mowing method as described above.

In a fourth aspect, an embodiment of the present disclosure provides a storage medium storing a computer program, where the computer program, when executed by a processor, causes the steps of the mowing method as described above to be implemented.

In the embodiments of the present disclosure, when an unknown obstacle is detected during a mowing operation of a mowing robot, the mowing task is interrupted, and the movement around the unknown obstacle is performed to generate the surrounding trajectory; the task breakpoint on the initial operation route at which the mowing task of the mowing robot is interrupted is obtained; the remaining operation region is determined in the preset mowing region based on the task breakpoint and the surrounding trajectory; the operation route corresponding to the remaining operation region is generated based on the task breakpoint and the preset mowing direction; and the mowing robot is controlled to return to the task breakpoint from the current position and continue to perform the mowing operation based on the operation route. In the mowing solution provided by the present disclosure, when an unknown obstacle is detected during a mowing operation of a mowing robot, the mowing task is interrupted, and the movement around the unknown obstacle is performed to generate the surrounding trajectory, which facilitates obstacle avoidance for the mowing robot. The task breakpoint on the initial operation route at which the mowing task of the mowing robot is interrupted is obtained, so that the mowing robot continues to perform the mowing task from the task breakpoint, preventing the mowing robot from returning to the start point of the initial operation route to restart the mowing task. The remaining operation region is determined in the preset mowing region based on the task breakpoint and the surrounding trajectory, so that the mowing robot continues to perform the mowing operation in the remaining operation region, preventing the mowing robot from repeating the mowing operation in the operation region for which the mowing operation has been completed, thereby shortening the working time of the mowing robot and improving the mowing efficiency. Compared with an existing mowing robot which can only rely on its own sensor and then perform a mowing operation in a remaining operation region without following a planned route, the mowing robot of the present disclosure generates the operation route corresponding to the remaining operation region based on the task breakpoint and the preset mowing direction, and the mowing robot is controlled to return to the task breakpoint from the current position and continue to perform the mowing operation based on the operation route, which is conducive to the improvement of the mowing efficiency. It can be seen therefrom that, with the embodiment of the present disclosure, the working time of the mowing robot can be shortened and the mowing efficiency can be improved.

### Brief Description of the Drawings

In order to more clearly describe the technical solutions in the embodiments of the present disclosure, the accompanying drawings necessary for describing the embodiments will be briefly described below. Apparently, the accompanying drawings in the description below merely show some of the embodiments of the present disclosure, and those skilled in the art would have obtained other drawings from these drawings without involving creative effort.
FIG. 1 is a schematic diagram of a scenario of a mowing method of an existing technical solution;
FIG. 2 is a first schematic flowchart of a mowing method according to an embodiment of the present disclosure;
FIG. 3 is a first schematic diagram of a scenario of a mowing method according to an embodiment of the present disclosure;
FIG. 4 is a second schematic diagram of a scenario of a mowing method according to an embodiment of the present disclosure;
FIG. 5 is a second schematic flowchart of a mowing method according to an embodiment of the present disclosure;
FIG. 6 is a third schematic diagram of a scenario of a mowing method according to an embodiment of the present disclosure;
FIG. 7 is a first schematic diagram of a structure of a mowing apparatus according to an embodiment of the present disclosure;
FIG. 8 is a second schematic diagram of a structure of a mowing apparatus according to an embodiment of the present disclosure; and
FIG. 9 is a schematic diagram of a structure of a mowing robot according to an embodiment of the present disclosure.

### Detailed Description of Embodiments

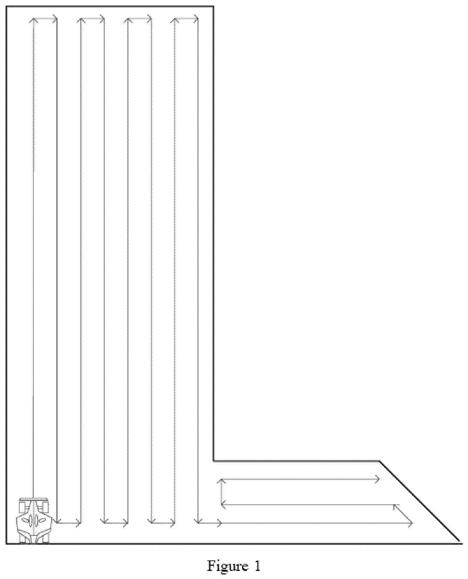

In the existing technical solution, the working of a mowing robot cannot be suspended during a mowing operation performed by the mowing robot, and when the mowing robot is restored from a suspended state to a working state, the mowing robot needs to perform the mowing operation again on a region for which the mowing operation has been completed, resulting in increased working time of the mowing robot, which reduces the mowing efficiency. With reference to FIG. 1, FIG. 1 is a schematic diagram of a scenario of a mowing method of the existing technical solution. As shown in FIG. 1, when the mowing robot is restored from the suspended state to the working state, the mowing robot re-plans a mowing route, and even if the re-planned mowing route includes a path which the mowing robot has traveled through or the re-planned mowing route passes through a region where the mowing operation has been performed, the mowing robot still performs the mowing operation according to the re-planned mowing route, resulting in increased working time of the mowing robot, which reduces the mowing efficiency.

The technical solutions in the embodiments of the present disclosure will be described clearly and completely below with reference to the accompanying drawings in the embodiments of the present disclosure. Apparently, the embodiments described are only some rather than all of the embodiments of the present disclosure. All the other embodiments obtained by those skilled in the art based on the embodiments of the present disclosure without creative effort shall fall within the scope of protection of the present disclosure.

It should be noted that when an element is referred to as being "fixed to" or "disposed" on another element, it may be directly on or indirectly on another element. When an element is referred to as being "connected" to another element, it may be directly or indirectly connected to another element. In addition, the connection may have the function of fixing or circuit connection.

It should be understood that the orientations or positional relationships indicated by the terms "length", "width", "upper", "lower", "front", "rear", "left", "right", "vertical", "horizontal", "top", "bottom", "inner", "outer", etc. are based on the orientation or positional relationship shown in the accompanying drawings and are only for facilitating the description of the embodiments of the present disclosure and simplifying the description, rather than indicating or implying that an apparatus or an element referred to must have a particular orientation or be constructed and operated in a particular orientation, and therefore will not be interpreted as limiting the present invention.

**In** addition, the terms "first" and "second" are merely used for the purpose of illustration, and cannot be construed as indicating or implying relative importance or implicitly indicating the number of technical features indicated. Thus, the features defined with "first" and "second" may explicitly or implicitly include one or more features. In the description of the embodiments of the present disclosure, "a plurality of" means two or more, unless specifically defined otherwise.

The embodiments of the present disclosure provide a mowing method and apparatus, a mowing robot, and a storage medium.

The mowing apparatus may be integrated particularly into a microcontroller unit (MCU) of a mowing robot, or integrated into an intelligent terminal or a server. The MCU, also referred as a single chip microcomputer or microcontroller, is designed to reduce the frequency and specifications of a central process unit (CPU) and integrate peripheral interfaces such as a memory, a timer, a USB, an analog-to-digital converter/digital-to-analog converter, a UART, a PLC, and a DMA to form a chip-level computer, to provide different combined controls for different applications. The mowing robot may walk automatically, prevent collisions, and return for charging automatically within a range, is provided with safety detection and battery level detection, and has a climbing ability, which is particularly suitable for lawn trimming and maintenance in places such as home courtyards and public green space. It has the characteristics of: automatic mowing, grass clipping cleanup, automatic sheltering from a rain, automatic charging, automatic unknown obstacle avoidance, small dimensions, electronic virtual fences, network control, etc.

The terminal may be a smartphone, a tablet, a laptop, a desktop computer, a smart speaker, a smart watch, etc., but not limited to those. The terminal and the server may be connected directly or indirectly by means of wired or wireless communication, the server may be a separate physical server, a server cluster or distributed system composed of a plurality of physical servers, or a cloud server that provides cloud services, cloud databases, cloud computing, cloud functions, cloud storage, network services, cloud communications, middleware services, domain name services, security services, CDNs, and basic cloud computing services such as big data and artificial intelligence platforms, which is not limited in the present disclosure.

Detailed descriptions are provided below. It should be noted that the order in which the following embodiments are described is not intended to limit the order of precedence of the embodiments. In the description of the following embodiments, a remaining operation region or preset mowing region refers to a closed region formed by sequentially joining a plurality of line segments in the same coordinate system. Boundaries of the remaining operation region or boundaries of the preset mowing region refer to the line segments used to enclose the remaining operation region or the preset mowing region to form the closed region. An operation route refers to a line segment that connects at least two coordinate points in the same coordinate system, where a start end of the line segment is a start point of the operation route, and a tail end of the line segment is an end point of the operation route. An task breakpoint refers to a coordinate point generated due to suspension of a mowing operation when the mowing robot travels along an initial operation route and performs the mowing operation halfway, which is a point for distinguishing between two portions of the initial operation route, namely a portion for which the mowing operation has been performed and a portion for which the mowing operation has not been performed. An unknown obstacle refers to an obstacle that is not marked in an operation map in advance and is an object that prevents the mowing robot from moving or passing through.

A mowing method comprises: obtaining an task breakpoint on an initial operation route at which a mowing task of a mowing robot is interrupted; determining a remaining operation region in a preset mowing region based on the task breakpoint; generating an operation route corresponding to the remaining operation region based on the task breakpoint and a preset mowing direction; and controlling the mowing robot to continue to perform a mowing operation based on the operation route.

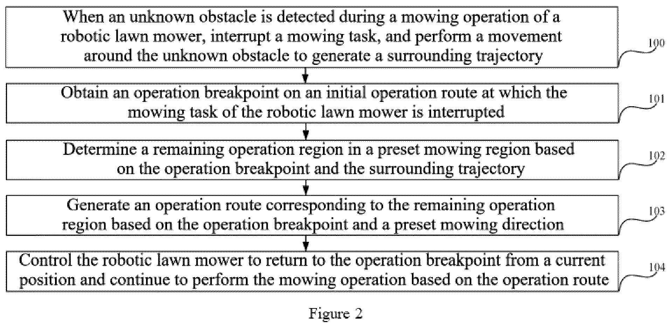

With reference to FIG. 2, FIG. 2 is a first schematic flowchart of a mowing method according to an embodiment of the present disclosure. A specific process of the mowing method may be as follows.

100: When an unknown obstacle is detected during a mowing operation of a mowing robot, interrupt a mowing task, and perform a movement around the unknown obstacle to generate a surrounding trajectory.

Optionally, the unknown obstacle may be a physical obstacle or a virtual obstacle that is set artificially.

In some embodiments, when the unknown obstacle is detected, a prompt that an unknown obstacle is present on a travel route of the mowing robot is given to a user, and then the user may control, through an APP mounted on a terminal, the mowing robot to move around an edge of the unknown obstacle, to form the surrounding trajectory for encircling (marking) the unknown obstacle. During the controlled movement of the mowing robot, the mowing robot needs to be kept from colliding with the unknown obstacle.

In some embodiments, the mowing robot may invoke a preset obstacle defining logic and then move along the edge of the unknown obstacle based on data detected by an obstacle avoidance sensor, while simultaneously recording trajectory data during the movement, so that the mowing robot self-moves around the unknown obstacle to generate the surrounding trajectory for defining (marking) the unknown obstacle.

Optionally, the step "performing a movement around the unknown obstacle to generate a surrounding trajectory" may specifically comprises:
(01) detecting whether the surrounding trajectory is a closed trajectory, where a start point and an end point of the closed trajectory are the same; and
(02) modifying the surrounding trajectory based on a preset strategy to obtain a closed trajectory when it is detected that the surrounding trajectory is not the closed trajectory.

It may be understood that the preset strategy is invoked and includes a turn direction, a turn angle, a turn amplitude, etc., and the turn direction, the turn angle, and the turn amplitude in the preset strategy can be set by the user.

Optionally, in some embodiments, the step "modifying the surrounding trajectory based on a preset strategy to obtain the closed trajectory" may specifically include:
(021) obtaining a shape and an area of the unknown obstacle;
(022) generating, based on the shape and the area of the unknown obstacle, a polygonal region covering the unknown obstacle, where the polygonal region is a closed region formed by sequentially joining a plurality of line segments, and each of the line segments belongs to a boundary of the polygonal region; and
(023) generating the closed trajectory based on the boundaries of the polygonal region.

It may be understood that, in some disclosure scenarios, the unknown obstacle is of an irregular shape, and it is difficult for the mowing robot to generate an operation route around the irregularly shaped unknown obstacle. When the unknown obstacle is an unknown obstacle of an irregular shape, in order to ensure that the mowing robot avoids the unknown obstacle, the generated polygonal region covering the unknown obstacle has an area greater than an area of the unknown obstacle, and the closed trajectory is generated along the boundaries of the polygonal region or the boundaries of the polygonal region are used as the closed trajectory.

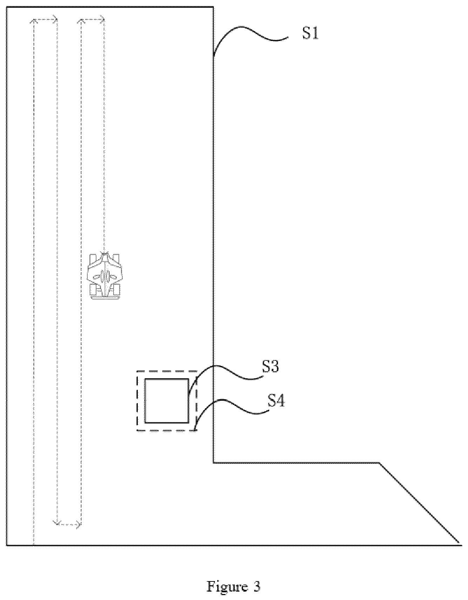

In a specific embodiment, with reference to FIG. 3, FIG. 3 is a second schematic diagram of a scenario of a mowing method according to an embodiment of the present disclosure. S1 is a preset operation region, and S3 is the detected unknown obstacle. S4 is the closed trajectory that defines (marks) the unknown obstacle S3, a region within the closed trajectory S4 is an obstacle region, and the mowing robot is prohibited from entering the obstacle region.

101: Obtaining an task breakpoint on an initial operation route when the mowing task of the mowing robot is interrupted.

The initial operation route is a preset operation route, and the mowing robot travels and performs the mowing operation according to the initial operation route.

It may be understood that the mowing task of the mowing robot may be interrupted as the mowing robot runs out of power and needs to go to a charging point for charging and then return to the task breakpoint to continue the remaining mowing operation. Therefore, it is necessary to record the task breakpoint on the initial operation route.

Optionally, the step "obtaining an task breakpoint on an initial operation route at which the mowing task of the mowing robot is interrupted" may specifically include:
(11) receiving a task interruption instruction; and
(12) recording the task breakpoint on the initial operation route based on a timestamp corresponding to the task interruption instruction.

It may be understood that, in some embodiments, a specific implementation of "recording the task breakpoint on the initial operation route based on a timestamp corresponding to the task interruption instruction" is as follows: when the mowing robot receives a task interruption instruction from the terminal and then suspending the mowing task, the mowing robot records a time point at which the suspension occurs and stores information of a position of the mowing robot corresponding to the time point at which the suspension occurs, where the information of the position of the mowing robot corresponding to the time point at which the suspension occurs is used as the task breakpoint.

In other embodiments, a specific implementation of "obtaining the task breakpoint on the initial operation route based on a timestamp corresponding to the task interruption instruction" is as follows: when the mowing robot travels along the initial operation route while performing the mowing operation, the mowing robot records a time point each time traveling to a node of the initial operation route, and when a time point recorded by the mowing robot is the same as the timestamp corresponding to the task interruption instruction, the node of the initial operation route corresponding to the time point is used as the task breakpoint.

102: Determining a remaining operation region in a preset mowing region based on the task breakpoint and the surrounding trajectory.

Optionally, in some embodiments, the initial operation route is still stored by the mowing robot during the suspension of the mowing operation of the mowing robot. Based on the task breakpoint, the mowing robot can learn that one segment of the initial operation route is the initial operation route for which the mowing operation has been completed, and the other segment of the initial operation route is the initial operation route for which the mowing operation has not been completed, so that the remaining operation region in the preset mowing region can be obtained based on the initial operation route for which the mowing operation has not been completed.

Optionally, in some embodiments, the step "determining a remaining operation region in a preset mowing region based on the task breakpoint and the surrounding trajectory" may specifically include:
(21) determining, based on the surrounding trajectory, a region to be mowed in the preset mowing region;
(22) determining the completed mowing operation route in the initial operation route based on the task breakpoint of the initial operation route and a start point of the initial operation route ; and
(23) dividing, based on the operation route for which the mowing operation has been completed, the region to be mowed into the remaining operation region and a completed operation region, where the completed operation region is an operation region corresponding to the completed mowing operation route, and the remaining operation region is an operation region in which no operation route exists.

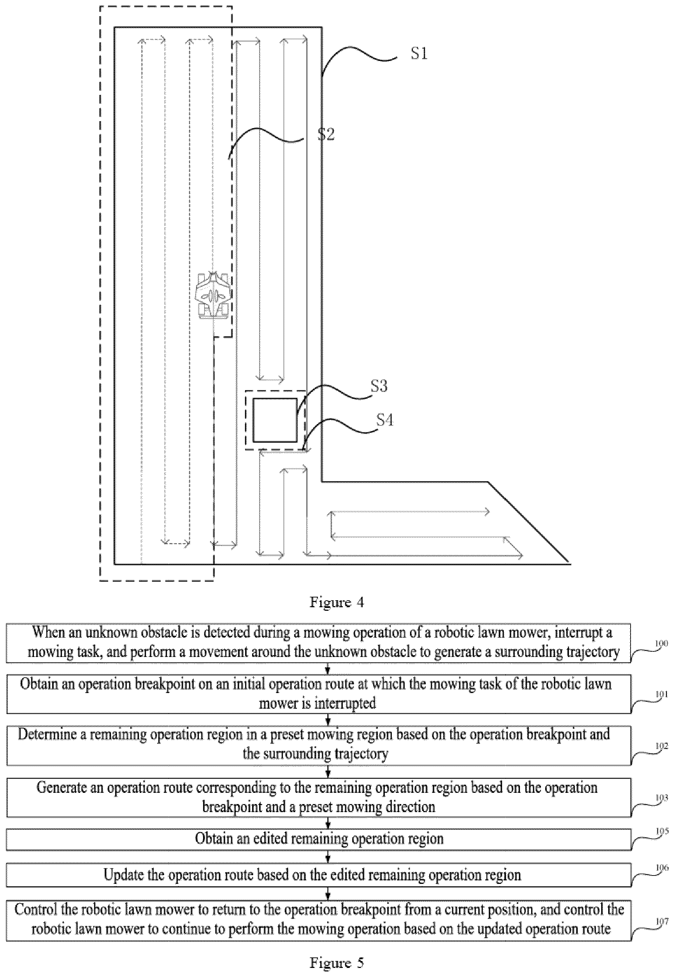

In a specific embodiment, with reference to FIG. 4, FIG. 4 is a first schematic diagram of a scenario of a mowing method according to an embodiment of the present disclosure. S1 is the preset operation region, S2 is the completed operation region, and S3 is the detected unknown obstacle. S4 is a region formed by the closed trajectory that encircles (marks) the unknown obstacle S3. A region in the preset operation region S1 excluding the completed operation region S2 is a region awaiting operation, and a region in the region awaiting operation excluding the unknown obstacle S3 and the closed trajectory S4 is the remaining operation region, where the operation route in the completed operation region is the operation route for which the mowing operation has been completed, the position of the mowing robot is the task breakpoint of the initial operation route, and the operation region in which no operation route exists is the remaining operation region. An operation route in the remaining operation region shown has been generated. It may be understood that the place which the mowing robot travels through along the operation route for which the mowing operation has been completed has been subjected to the mowing operation, that is, the completed operation region S2 is a region that has been subjected to the mowing operation and requires no repeated mowing operation. Since no operation route exists in the remaining operation region, when the mowing robot restores from the suspended state to the working state, a new operation route is planned in the remaining operation region by using the task breakpoint as a new start point, so that the mowing robot performs the mowing operation according to the new operation route, without following the initial operation route, which omits the step of storing the initial operation route by the mowing robot.

It should be noted that the operation route in this embodiment of the present disclosure refers to an arrowed line segment as shown in FIG. 4, and a sequential order of the operation routes is as shown by orientations of the arrows.

103: Generating an operation route corresponding to the remaining operation region based on the task breakpoint and a preset mowing direction.

Optionally, in some embodiments, the operation route that takes the task breakpoint as a start point is generated in the remaining operation region based on the preset mowing direction, where the preset mowing manner may be a travel direction in which the mowing robot travels to the task breakpoint along the initial operation route.

104: Controlling the mowing robot to return to the task breakpoint from a current position and continue to perform the mowing operation based on the operation route.

For example, a server may control the mowing robot to travel according to a square wave-shaped mowing route, to perform the mowing operation. For another example, an intelligent terminal may control the mowing robot to travel according to the square wave-shaped mowing route, to perform the mowing operation. For yet another example, an MCU in the mowing robot may control the mowing robot to continue to perform the mowing operation based on the square wave-shaped mowing route, that is, the mowing robot performs the mowing operation according to the square wave-shaped mowing route.

After the obstacle is encircled by the surrounding trajectory, the mowing robot of the present disclosure directly returns to the task breakpoint from the current position of the mowing robot and then travels along the operation route corresponding to the remaining operation region, to continue to perform the mowing operation in the remaining operation region where the mowing operation has not been performed, until the mowing operation is finished. It can be seen therefrom that, after the obstacle is encircled, the mowing robot of the present disclosure does not need to return to the start point of the initial operation route, which reduces a distance for which the mowing robot travels, avoiding the waste of time and thereby improving the mowing efficiency.

With reference to FIG. 5, FIG. 5 is a second schematic flowchart of a mowing method according to an embodiment of the present disclosure. On the basis of the above-mentioned mowing method, the present disclosure further provides a mowing method including the following steps.

105: Obtaining an edited remaining operation region.

In some embodiments, the mowing robot sends the remaining operation region to a user terminal in the form of an image. When the user terminal receives the remaining operation region in the form of an image, the user can edit the remaining operation region through the user terminal, for example, prune the remaining operation region, add an operation region, modify a boundary of the remaining operation region, etc. Then, the edited remaining operation region is sent to the mowing robot through the user terminal.

106: Updating the operation route based on the edited remaining operation region.

In some embodiments, when the edited remaining operation region is the pruned remaining operation region, a total length of the operation route is shortened. When the edited remaining operation region is the boundary-modified remaining operation region, the operation route is modified so that the modified operation route does not exceed the boundary of the modified remaining operation region.

Optionally, the step "updating the operation route based on the edited remaining operation region" may specifically include:
(61) generating an operation route corresponding to an additional operation region; and
(62) joining the operation route corresponding to the additional operation region and the operation route corresponding to the remaining operation region, to obtain the updated operation route.

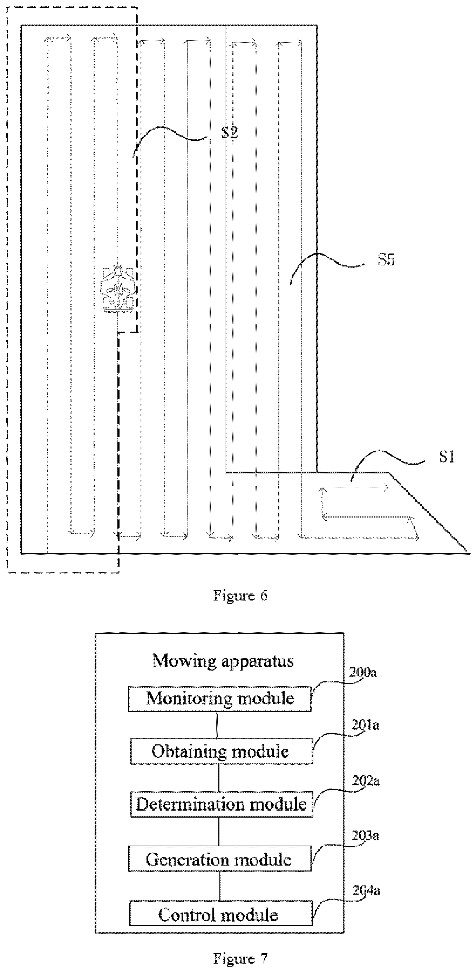

In an embodiment, with reference to FIG. 6, FIG. 6 is a third schematic diagram of a scenario of a mowing method according to an embodiment of the present disclosure. S1 is the preset operation region, and S2 is the completed operation region. A region in the preset operation region S1, excluding the completed operation region S2 and the obstacle region, is the remaining operation region. S5 is the additional operation region, and after an operation route is generated in the additional operation region, the operation route corresponding to the additional operation region is joined to the operation route corresponding to the remaining operation region, to obtain the updated operation route.

107: Controlling the mowing robot to return to the task breakpoint from a current position, and controlling the mowing robot to continue to perform the mowing operation based on the updated operation route.

In this embodiment of the present disclosure, the task breakpoint on the initial operation route at which a mowing task of a mowing robot is interrupted is obtained, then the remaining operation region in the preset mowing region is determined based on the task breakpoint, next the operation route corresponding to the remaining operation region is generated based on the task breakpoint and the preset mowing direction, and finally the mowing robot is controlled to continue to perform the mowing operation based on the operation route. In the mowing solution provided by the present disclosure, the task breakpoint on the initial operation route at which the mowing task of the mowing robot is interrupted is obtained, so that the mowing robot continues to perform the mowing task from the task breakpoint, preventing the mowing robot from returning to the start point of the initial operation route to restart the mowing task. The remaining operation region is determined in the preset mowing region based on the task breakpoint, so that the mowing robot continues to perform the mowing operation in the remaining operation region, preventing the mowing robot from repeating the mowing operation in the operation region for which the mowing operation has been completed, thereby shortening the working time of the mowing robot and improving the mowing efficiency. Compared with an existing mowing robot which can only rely on its own sensor and then perform a mowing operation in a remaining operation region without following a planned route, the mowing robot of the present disclosure generates the operation route corresponding to the remaining operation region based on the task breakpoint and the preset mowing direction, and the mowing robot is controlled to continue to perform the mowing operation based on the operation route, which is conducive to the improvement of the mowing efficiency. It can be seen therefrom that, with the embodiment of the present disclosure, the working time of the mowing robot can be shortened and the mowing efficiency can be improved.

For a better implementation of the mowing method of the embodiment of the present disclosure, an embodiment of the present disclosure further provides a mowing apparatus based on the above description. The terms therein have the same meaning as those in the above mowing method, and for details of the implementation, reference may be made to the description in the method embodiment.

With reference to FIG. 7, FIG. 7 is a first schematic diagram of a structure of a mowing apparatus according to an embodiment of the present disclosure, where the mowing apparatus may include an obtaining module 201a, a determination module 202a, a generation module 203a, and a control module 204a, which may be specifically provided as follows.

The monitoring module 200a is configured to, when an unknown obstacle is detected during a mowing operation of a mowing robot, interrupt a mowing task, and perform a movement around the unknown obstacle to generate a surrounding trajectory.

Optionally, in some embodiments, the generation module 200a specifically includes:
a detection unit configured to detect whether the surrounding trajectory is a closed trajectory, where a start point and an end point of the closed trajectory are the same; and modify the surrounding trajectory based on a preset strategy to obtain a closed trajectory when it is detected that the surrounding trajectory is not a closed trajectory.

Optionally, in some embodiments, the detection unit may specifically be configured to: obtain a shape and an area of the unknown obstacle; generate, based on the shape and the area of the unknown obstacle, a polygonal region covering the unknown obstacle, where the polygonal region is a closed region formed by sequentially joining a plurality of line segments, and each of the line segments is a boundary of the polygonal region; and generate the closed trajectory based on the boundaries of the polygonal region.

The obtaining module 201a is configured to obtain an task breakpoint on an initial operation route at which the mowing task of the mowing robot is interrupted.

Optionally, in some embodiments, the obtaining module 201a may specifically be configured to: receive a task interruption instruction; and obtain the task breakpoint on the initial operation route based on a timestamp corresponding to the task interruption instruction.

The determination module 202a is configured to determine a remaining operation region in a preset mowing region based on the task breakpoint and the surrounding trajectory.

Optionally, in some embodiments, the determination module 202a may specifically be configured to: determine, based on the surrounding trajectory, a region to be mowed in the preset mowing region; determine the completed mowing operation route in the initial operation route based on the task breakpoint of the initial operation route and a start point of the initial operation route ; and divide, based on the operation route for which the mowing operation has been completed, the region to be mowed into the remaining operation region and a completed operation region, where the completed operation region is an operation region in which the operation route for which the mowing operation has been completed is located, and the remaining operation region is an operation region in which no operation route exists.

The generation module 203a is configured to generate an operation route corresponding to the remaining operation region based on the task breakpoint and a preset mowing direction.

The control module 204a is configured to control the mowing robot to return to the task breakpoint from a current position and continue to perform the mowing operation based on the operation route.

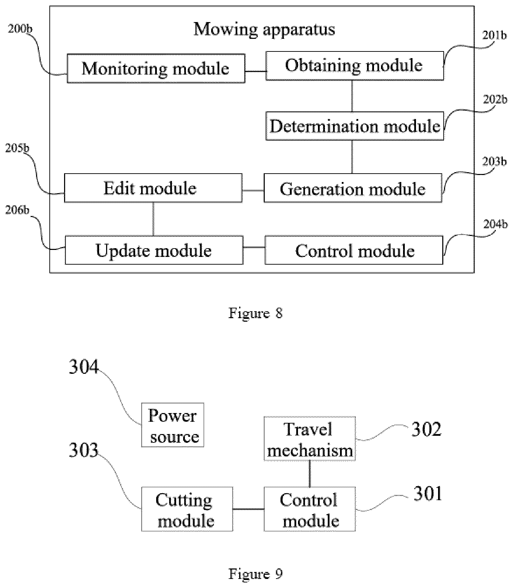

Alternatively, in some embodiments, with reference to FIG. 8, FIG. 8 is a second schematic diagram of a structure of a mowing apparatus according to an embodiment of the present disclosure. The mowing apparatus further includes: a monitoring module 200b, an obtaining module 201b, a determination module 202b, a generation module 203b, a control module 204b, an edit module 205b, and an update module 206b.

The monitoring module 200b is configured to, when an unknown obstacle is detected during a mowing operation of a mowing robot, interrupt a mowing task, and perform a movement around the unknown obstacle to generate a surrounding trajectory.

The obtaining module 201b is configured to obtain an task breakpoint on an initial operation route at which the mowing task of the mowing robot is interrupted.

The determination module 202b is configured to determine a remaining operation region in a preset mowing region based on the task breakpoint and the surrounding trajectory.

The generation module 203b is configured to generate an operation route corresponding to the remaining operation region based on the task breakpoint and a preset mowing direction.

The edit module 205b is configured to obtain an edited remaining operation region.

The update module 206b is configured to update the operation route based on the edited remaining operation region.

Optionally, in some embodiments, the update module 206 may specifically be configured to: generate an operation route corresponding to an additional operation region; and join the operation route corresponding to the additional operation region and the operation route corresponding to the remaining operation region, to obtain the updated operation route.

The control module 204b is configured to control the mowing robot to return to the task breakpoint from a current position, and control the mowing robot to continue to perform the mowing operation based on the updated operation route.

In this embodiment of the present disclosure, the obtaining module 201 obtains the task breakpoint on the initial operation route at which a mowing task of a mowing robot is interrupted, then the determination module 202 determines the remaining operation region in the preset mowing region based on the task breakpoint, next the generation module 203 generates the operation route corresponding to the remaining operation region based on the task breakpoint and the preset mowing direction, and finally the control module 204 controls the mowing robot to continue to perform the mowing operation based on the operation route. In the mowing solution provided by the present disclosure, the task breakpoint on the initial operation route at which the mowing task of the mowing robot is interrupted is obtained, so that the mowing robot continues to perform the mowing task from the task breakpoint, preventing the mowing robot from returning to the start point of the initial operation route to restart the mowing task. The remaining operation region is determined in the preset mowing region based on the task breakpoint, so that the mowing robot continues to perform the mowing operation in the remaining operation region, preventing the mowing robot from repeating the mowing operation in the operation region for which the mowing operation has been completed, thereby shortening the working time of the mowing robot and improving the mowing efficiency. Compared with an existing mowing robot which can only rely on its own sensor and then perform a mowing operation in a remaining operation region without following a planned route, the mowing robot of the present disclosure generates the operation route corresponding to the remaining operation region based on the task breakpoint and the preset mowing direction, and the mowing robot is controlled to continue to perform the mowing operation based on the operation route, which is conducive to the improvement of the mowing efficiency. It can be seen therefrom that, with the embodiment of the present disclosure, the working time of the mowing robot can be shortened and the mowing efficiency can be improved.

In addition, an embodiment of the present disclosure further provides a mowing robot. As shown in FIG. 9, a schematic diagram of a structure of the mowing robot according to the embodiment of the present disclosure is shown, which is specifically as follows.

The mowing robot may include components such as a control module 301, a travel mechanism 302, a cutting module 303, and a power source 304. Those skilled in the art may understand that the structure of the mowing robot shown in FIG. 9 does not impose a limitation on the mowing robot in this embodiment, and may include more or fewer components than those shown, a combination of some components or a different arrangement of components. Where:

The control module 301 is a control center of the mowing robot, the control module 301 may specifically include components such as a central process unit (CPU), a memory, an input/output port, a system bus, a timer/counter, a digital-to-analog converter and an analog-to-digital converter. The CPU performs various functions of the mowing robot and processes data by running or executing software programs and/or modules stored in the memory and calling the data stored in the memory. Preferably, the CPU can integrate an application processor and a modem processor, where the application processor mainly processes operating systems and applications, etc., and the modem processor mainly processes wireless communications. It may be understood that the above mentioned modem processor may alternatively be not integrated into the CPU.

The memory may be used to store software programs and modules, and the CPU executes various functional applications and processes data by running the software programs and modules stored in the memory. The memory may mainly include a program storage area and a data storage area, where the program storage area can store an operating system, an application required by at least one function (such as a sound play function and an image play function); and the data storage area can store data created during the use of the mowing robot, etc. In addition, the memory may include a high-speed random access memory, and may also include a non-volatile memory, such as at least one disk storage device and a flash memory device, or other volatile solid-state storage devices. Accordingly, the memory may also include a memory controller to provide an access by the CPU to the memory.

The travel mechanism 302 is electrically connected to the control module 301 for adjusting a travel speed and a travel direction of the mowing robot in response to control signals transmitted by the control module 301, to implement the self-moving function of the mowing robot.

The mowing module 303 is electrically connected to the control module 301 and is configured to adjust the height and speed of the cutter disk in response to the control signals transmitted by the control module, to implement the mowing operation.

The power source 304 may be logically connected to the control module 301 through a power management system, to implement the functions, such as charging management, discharging management, and power consumption management, through the power management system. The power source 304 may also include any components such as one or more direct current or alternating current power source, a recharging system, a power failure detection circuit, a power converter or an inverter, and a power status indicator.

Although not shown, the mowing robot may also include a communication module, a sensor module, a prompt module, etc., which are not repeated herein.

The communication module is configured to transmit and receive signals during information transmission and receiving, and to enable signal transmission and receiving with user equipment, a base station, or a server by means of communication connection with the user equipment, the base station, or the server.

The sensor module is configured to collect internal or external environmental information, and to feed the collected environmental data back to the control module for making a decision, thereby achieving the functions of precise positioning and intelligent obstacle avoidance of the mowing robot. Optionally, the sensor may include: an ultrasonic sensor, an infrared sensor, an impact sensor, a rain sensor, a lidar sensor, an inertial measurement unit, a tachometer, an image sensor, a position sensor, and other sensors, which are not limited herein.

The prompt module is configured to indicate a current operating status of the mowing robot to the user. In this solution, the prompt module includes, but is not limited to, an indicator light, a buzzer, and the like. For example, the mowing robot can indicate to the user a current status of the power source, an operating status of an electric motor, an operating status of the sensor, etc. by means of the indicator light. For another example, if it is detected that the mowing robot malfunctions or is stolen, an alert can be achieved by the buzzer.

Specifically, in this embodiment, the processor in the control module 301 loads executable files corresponding to processes of one or more applications into the memory, and then the processor runs the applications stored in the memory to implement various functions as follows:
obtaining an task breakpoint on an initial operation route at which a mowing task of a mowing robot is interrupted; determining a remaining operation region in a preset mowing region based on the task breakpoint; generating an operation route corresponding to the remaining operation region based on the task breakpoint and a preset mowing direction; and controlling the mowing robot to continue to perform a mowing operation based on the operation route.

For the implementations of the various operations above, reference may be made to the foregoing embodiments, which are not repeated herein.

In this embodiment of the present disclosure, the task breakpoint on the initial operation route at which a mowing task of a mowing robot is interrupted is obtained, then the remaining operation region in the preset mowing region is determined based on the task breakpoint, next the operation route corresponding to the remaining operation region is generated based on the task breakpoint and the preset mowing direction, and finally the mowing robot is controlled to continue to perform the mowing operation based on the operation route. In the mowing solution provided by the present disclosure, the task breakpoint on the initial operation route at which the mowing task of the mowing robot is interrupted is obtained, so that the mowing robot continues to perform the mowing task from the task breakpoint, preventing the mowing robot from returning to the start point of the initial operation route to restart the mowing task. The remaining operation region is determined in the preset mowing region based on the task breakpoint, so that the mowing robot continues to perform the mowing operation in the remaining operation region, preventing the mowing robot from repeating the mowing operation in the operation region for which the mowing operation has been completed, thereby shortening the working time of the mowing robot and improving the mowing efficiency. Compared with an existing mowing robot which can only rely on its own sensor and then perform a mowing operation in a remaining operation region without following a planned route, the mowing robot of the present disclosure generates the operation route corresponding to the remaining operation region based on the task breakpoint and the preset mowing direction, and the mowing robot is controlled to continue to perform the mowing operation based on the operation route, which is conducive to the improvement of the mowing efficiency. It can be seen therefrom that, with the embodiment of the present disclosure, the working time of the mowing robot can be shortened and the mowing efficiency can be improved.

Those of ordinary skill in the art may understand that all or some of the steps of the various methods of the foregoing embodiments may be completed through instructions, or be completed by controlling related hardware through instructions, and the instructions may be stored in a computer-readable storage medium and loaded and executed by a processor.

To this end, an embodiment of the present disclosure provides a storage medium storing a plurality of instructions that can be loaded by a processor to cause the steps of any of the mowing methods provided in the embodiments of the present disclosure to be performed. For example, the instructions may cause the following steps to be performed:
obtaining an task breakpoint on an initial operation route at which a mowing task of a mowing robot is interrupted; determining a remaining operation region in a preset mowing region based on the task breakpoint; generating an operation route corresponding to the remaining operation region based on the task breakpoint and a preset mowing direction; and controlling the mowing robot to continue to perform a mowing operation based on the operation route.

For the implementations of the various operations above, reference may be made to the foregoing embodiments, which are not repeated herein.

The storage medium may include: a read only memory (ROM), a random access memory (RAM), a magnetic disk, an optical disk, or the like.

Thanks to the instructions stored in the storage medium, the steps of any of the mowing methods provided in the embodiments of the present disclosure can be performed, and accordingly, the benefits achievable by any of the mowing methods provided in the embodiments of the present disclosure can be achieved. See the foregoing embodiments for details, which are not repeated herein.

The mowing method and apparatus, the mowing robot, and the storage medium provided in the embodiments of the present disclosure are described in detail above, and the principles and implementations of the present disclosure are set forth with specific examples herein. The descriptions of the foregoing embodiments are merely intended to facilitate understanding of the method in the present disclosure and the core idea thereof. In addition, for those skilled in the art, variations may be made to the specific implementations and disclosure range based on the idea of the present disclosure. In conclusion, the contents of this specification should not be construed as a limitation to the present disclosure.

## Claims

1. A mowing method, comprising:
interrupting a mowing task of a mowing robot when an unknown obstacle is detected during a mowing operation of a mowing robot, and performing a movement around the unknown obstacle to generate a surrounding trajectory;
obtaining an task breakpoint on an initial operation route when the mowing task of the mowing robot is interrupted;
determining a remaining operation region in a preset mowing region based on the task breakpoint and the surrounding trajectory;
generating an operation route corresponding to the remaining operation region based on the task breakpoint and a preset mowing direction; and
controlling the mowing robot to return to the task breakpoint from a current position and continue to perform the mowing operation based on the operation route.

2. The method according to claim 1, wherein the obtaining the task breakpoint on the initial operation route when the mowing task of the mowing robot is interrupted comprises:
receiving a task interruption instruction; and
obtaining the task breakpoint on the initial operation route based on a timestamp corresponding to the task interruption instruction.

3. The method according to claim 1, wherein the determining the remaining operation region in the preset mowing region based on the task breakpoint and the surrounding trajectory comprises:
determining a region to be mowed in the preset mowing region based on the surrounding trajectory;
determining a completed mowing operation route in the initial operation route based on the task breakpoint of the initial operation route and a start point of the initial operation route; and
dividing the region to be mowed into the remaining operation region and a completed operation region based on the completed mowing operation route ,wherein the completed operation region is an operation region corresponding to the completed mowing operation route, and the remaining operation region is an operation region in which no operation route exists.

4. The method according to claim 1, wherein the performing the movement around the unknown obstacle to generate the surrounding trajectory comprises:
detecting whether the surrounding trajectory is a closed trajectory, wherein a start point and an end point of the closed trajectory are the same; and
modifying the surrounding trajectory based on a preset strategy to obtain a closed trajectory when it is detected that the surrounding trajectory is not a closed trajectory.

5. The method according to claim 4, wherein the modifying the surrounding trajectory based on a preset strategy to obtain the closed trajectory comprises:
obtaining a shape and an area of the unknown obstacle;
generating, based on the shape and the area of the unknown obstacle, a polygonal region covering the unknown obstacle, wherein the polygonal region is a closed region formed by sequentially joining a plurality of line segments, and each of the line segments belongs to a boundary of the polygonal region; and
generating the closed trajectory based on the boundaries of the polygonal region.

6. The method according to claim 1, further comprising:
obtaining an edited remaining operation region; and
updating the operation route based on the edited remaining operation region,
wherein the controlling the mowing robot to continue to perform the mowing operation based on the operation route comprises: controlling the mowing robot to continue to perform the mowing operation based on an updated operation route.

7. The method according to claim 6, wherein the updating the operation route based on the edited remaining operation region comprises:
generating an operation route corresponding to an additional operation region; and
joining the operation route corresponding to the additional operation region and the operation route corresponding to the remaining operation region, to obtain the updated operation route.

8. A mowing apparatus, comprising:
a monitoring module configured to, interrupt a mowing task of a mowing robot when an unknown obstacle is detected during a mowing operation of a mowing robot, and perform a movement around the unknown obstacle to generate a surrounding trajectory;
an obtaining module configured to obtain an task breakpoint on an initial operation route at which the mowing task of the mowing robot is interrupted;
a determination module configured to determine a remaining operation region in a preset mowing region based on the task breakpoint and the surrounding trajectory;
a generation module configured to generate an operation route corresponding to the remaining operation region based on the task breakpoint and a preset mowing direction; and
a control module configured to control the mowing robot to return to the task breakpoint from a current position and continue to perform the mowing operation based on the operation route.

9. A mowing robot, comprising a memory, a processor, and a computer program stored on the memory and executable by the processor, wherein the processor, when executing the program, implements the steps of the mowing method according to any one of claims 1 to 7.

10. A storage medium storing a computer program, wherein the computer program, when executed by a processor, causes the steps of the mowing method according to any one of claims 1 to 7 to be implemented.
